# EUROPEAN PATENT APPLICATION

(11) **EP 4 571 582 A1**
(43) Date of publication of application: **18.06.2025**
(21) Application number: 23307211.5
(22) Date of filing: 14.12.2023
(51) Int. Cl.: G06N 3/047, G06N 3/0455, G06N 3/09, G06N 3/044, G06N 3/0464

(54) **NEURAL NETWORK-BASED ESTIMATION METHOD FOR PROVIDING A PROBABILISTIC OUTPUT, APPARATUS IMPLEMENTING THE ESTIMATION METHOD, AND METHOD FOR TRAINING THE NEURAL NETWORK**

(71) Applicant: 7 Sensing Software, 75012 Paris (FR)
(72) Inventor: CHACON-ALAM, Ashley, 92130 Issy-les-Moulineaux (FR); EL QOUNS, Abdelkarim, 75019 Paris (FR); KNYSH, Borys, 78000 Versailles (FR); SAKSENA, Saumya Kumaar, 94100 Saint-Maur-des-Fossés (FR)
(74) Representative: Novagraaf Technologies

(57) **Abstract**

An estimation method is disclosed for generating an uncertainty associated with a final estimation produced by a neural network based on input data. The neural network comprises a first learning model comprising a first encoder configured to receive the input data and to generate a feature vector, and a decoder configured to receive the feature vector and to generate a first estimation relating to the input data, and a second learning model comprising a second encoder configured to receive the feature vector and the first estimation, and to generate at least one modeling parameter of a probability distribution, the second learning model being configured to generate said uncertainty based on said at least one modeling parameter.

An apparatus implementing the estimation method for producing a signal, and a method for training the neural network are also disclosed.

## Description

### TECHNICAL FIELD

Various example embodiments relate generally to neural network-based estimation methods designed for providing an estimation from input data obtained from one or more data sources, to methods for training said neural networks, and to apparatus configured to produce a signal based on the outputs generated by such neural networks. The example embodiments can have many applications amongst which data fusion between a plurality of data sources. The disclosure is not limited to data fusion though.

### BACKGROUND

Data fusion between multiple data sources has become a critical area in many fields of technology for example in autonomous driving, augmented and/or virtual reality, vital signs monitoring etc.

Neural networks have become popular for data fusion because they do not require handcrafted rules. They learn certain features from given input data and therefore they can generalize much more than conventional methods. Neural network-based data fusion methods have the advantage of being applicable in numerous fields with a level of adaptability that the conventional fusion methods don't allow.

However, these neural networks are often treated as black boxes, thereby making it difficult to interpret their outputs, and making it even more difficult to diagnose faulty responses.

This is a general problem associated with using neural networks which is not limited to data fusion.

In general, there is a need for a neural network-based estimation method that provides outputs which are more interpretable.

### SUMMARY

According to some aspects, there is provided the subject matter of the independent claims. Some further aspects are defined in the dependent claims.

According to a first aspect, a computer implemented estimation method is disclosed comprising steps for generating an uncertainty associated with a final estimation produced by a neural network based on input data. The neural network comprises a first learning model comprising a first encoder configured to receive the input data and to generate a feature vector, and a decoder configured to receive the feature vector and to generate a first estimation relating to the input data, and a second learning model comprising a second encoder configured to receive the feature vector and the first estimation, and to generate at least one modeling parameter of a probability distribution, the second learning model being configured to generate said uncertainty based on said at least one modeling parameter.

In an embodiment, the input data are acquired by one or more data sources. For example, at least part of the one or more data sources are sensors.

In an embodiment, the final estimation is based on said first estimation. In another embodiment where the probability distribution has a central tendency, the final estimation is based on said central tendency.

In an embodiment, the at least one modeling parameter is representative of a dispersion of the probability distribution. In another embodiment, the at least one modeling parameter is representative of a dispersion of the probability distribution and a central tendency of the probability distribution.

In a second aspect, a computer implemented estimation method is disclosed which comprises steps for implementing a second learning model intended to cooperate with a first learning model for performing the steps of a method as disclosed herein for generating an uncertainty associated with a final estimation produced by a neural network based on input data.

In a third aspect, a first computer implemented training method is disclosed comprising steps for training a second learning model based on a pre-trained first learning model, wherein the second learning model is intended to be used for performing the steps of an estimation method as disclosed herein. This first training method comprises receiving from a pre-trained first learning model, a feature vector and a first estimation based on training input data associated with target estimations, and maximizing a likelihood function so that for said training input data, under the probability distribution modeled by the at least one modeling parameter, the target estimations are more probable.

In a fourth aspect, a second computer implemented training method is disclosed comprising steps for training a neural network to be used in an estimation method as disclosed herein. In this second training method, the first learning model and the second learning model are jointly trained based on training input data associated target estimations, said training method comprising: minimizing a first error by the first learning model between the target estimations and the first estimations generated by the decoder for said training input data, and maximizing a likelihood function so that for said training input data, under the probability distribution modeled by the at least one modeling parameter, the target estimations are more probable.

In a fifth aspect, an apparatus is disclosed which is configured to implement a function based on input data originating from at least one data source, the function comprising generating a final estimation and an uncertainty associated with said final estimation, from the input data, by a computer implemented estimation method as disclosed herein.

In an embodiment, the function further comprises delivering a signal taking into consideration said final estimation and said uncertainty.

In an embodiment, the function comprises performing a data fusion from input data originating from a plurality of data sources.

In an embodiment, the apparatus comprises at least one sensor, and at least part of the input data is acquired by the at least one sensor.

For example, the input data include data representative of vital signs of a user, or of street signs of a vehicle, or of a 3D scene, and the signal is indicative of a condition of the user, or a driving decision, or a rendering decision respectively.

The apparatus may be constituted by software means, i.e. instructions intended to be executed by circuitry to perform one or more or all of the steps to be carried out by the apparatus in application of an estimation / training method as described in the present disclosure. The circuitry may be constituted by dedicated circuitry. It may also be formed from one or more processors and one or more memories comprising one or more computer program codes, said processors, memories and computer codes being configured to cause the apparatus to perform one or more or all of the steps of the methods described in the present disclosure. Thus, in one embodiment, the apparatus comprises at least one processor and at least one non-transitory memory which contains computer program instructions which when executed by said at least one processor cause execution of an estimation / training method as described above. For example, said apparatus is a wearable device, or a car, or multimedia device like a smartphone.

In another aspect, a computer program is disclosed which comprises instructions which when executed by an apparatus cause the apparatus to perform the steps of an estimation method or a training method as disclosed herein.

In yet another aspect, a non-transitory computer program product is disclosed comprising instructions which when executed by an apparatus cause the apparatus to perform the steps of an estimation method or a training method as disclosed herein.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG.1 is a block diagram of a neural network configured to generate an estimation and an uncertainty associated with said estimation.
FIG.2 is a block diagram of a known supervised learning training method.
FIG.3 is a block diagram of first training method, referred to as pre-trained method.
FIG.4 is a block diagram of a second training method referred to as joint training method.
FIG.5 is a block diagram of an apparatus implementing a neural network as disclosed herein, and / or a training method as disclosed herein.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

The present disclosure relates to a neural network which comprises a first learning model and is configured to provide an uncertainty about a first estimation generated by the first learning model. The first learning model is referred to as deterministic model in the following of the description, and the first estimation is referred to as deterministic estimation or deterministic output.

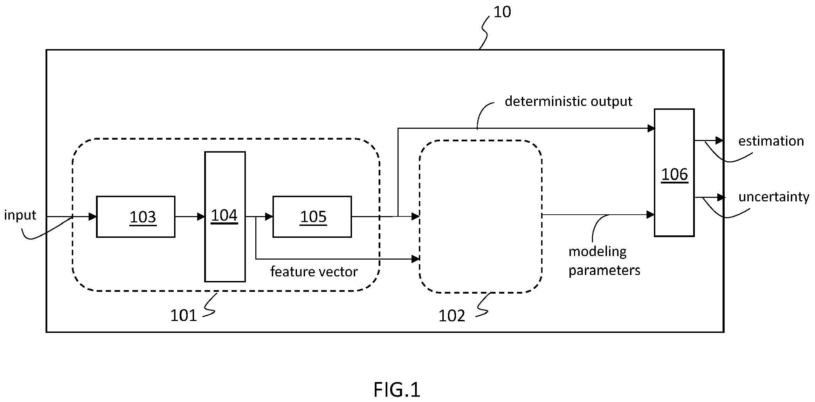

An exemplary embodiment of such neural network is depicted in FIG.1. The neural network of FIG.1 is referenced 10. It comprises a first learning model (or deterministic model) 101 and a second learning model 102. The second learning model 102 is referred to as probabilistic model in the following of the description.

The first learning model 101 typically comprises an encoder 103 configured to receive the input data organized in input samples and transform (or encode) the received input sample into a feature vector in a latent space 104, and a decoder 105 configured to receive the feature vector and to generate an estimation, referred to as deterministic output, corresponding to the input sample. The feature vector is a compressed and smarter version of the input sample. The decoder is meant to transform (or decode) the smart latent space generated by the encoder 103 to a certain desired deterministic output.

Typically, the encoder 103 and the decoder 105 consists in a stack of processing layers such as convolutions, LSTMs, GRUs etc. These layers have tunable parameters which are updated during a process commonly referred to as training. At inference time, the parameters of the encoder 103 and the decoder 105 are frozen to the best values obtained during training.

The neural network 10 further comprises a second learning model 102 configured to receive as input the deterministic output generated by the decoder 105 and the feature vectors generated by the encoder 103. Based on the deterministic output and the feature vector, the probabilistic model 102 generates at least one modeling parameter of a probability distribution. Then, based on the at least one modeling parameters, the neural network outputs a final estimation and an uncertainty associated with the final estimation. The output module of the neural network is referenced 106 in FIG.1.

Many probability distributions can be used, for example a Gaussian distribution, or a gamma or lognormal distribution, or a categorical distribution etc. The most appropriate distributions are bell-shape distributions, because empirically the error between a target and an estimation is distributed according to this shape. The choice of the distribution usually depends on the characteristic of the input data and the best suited representation of the uncertainty.

The probability distribution can be symmetric or asymmetric and can be represented by different types of modeling parameters e.g. a central tendency and/or a dispersion of the probability distribution.

For example, when the probability distribution is a Gaussian like distribution, the probabilistic model 102 generates two modeling parameters: one modeling parameter representative of a dispersion of the probability distribution (e.g. the standard deviation), and the other modeling parameter representing a central tendency of the probability distribution (e.g. the mean).

Since we model central tendency and dispersion, so we assume that the distribution we've chosen makes sense for our task, then feeding prior information about central tendency parameter to the probabilistic DNN, also simplifies its task.

The estimation provided by the output module 6 can be the deterministic output, or, when the probability distribution has a central tendency, with a Gaussian probability distribution, it can be the central tendency of the probability distribution. In another example, a Gamma distribution can be used which is typically defined by three parameters, referred to as shape, rate and threshold where the shape controls the shape of the distribution (higher values result in a distribution more concentrated around the mean), the rate controls the scale of the distribution, and the threshold represents the smallest value of distribution, also known as the location.

The disclosed neural network allows to model the uncertainty, by integrating the entropy information contained in the feature space of the neural network. The feature space can be seen as a compressed version of the input signal which is provided to the probabilistic model. Therefore, the uncertainty generated by the neural network is varying depending on the input samples and how they're interpreted by the deterministic model. The disclosed neural network provides a dynamic estimation of the uncertainty.

A probabilistic model that would not consider the feature space as an input would fail to provide a varying uncertainty which depends on the input signal. Indeed, the dispersion of the deterministic output obtained for a given input value would always be the same because the probabilistic model would lack information about the signal that generated this deterministic output.

In addition to the feature space, the probabilistic model 102 is also fed with the deterministic output of the deterministic model 101. Inputting the deterministic output helps to simplify the task to be learned by the probabilistic model (i.e. the task of estimating the uncertainty). A simpler task requires a less complex probabilistic model in terms of number of parameters of the probabilistic model, and a training dataset of reduced size. The deterministic output is an a priori information that makes the training process faster and more stable. For example, with a Gaussian probability distribution, the deterministic output corresponds to an a priori estimation of the mean of the probability distribution. For other distributions with no parameter representing the central tendency, the probabilistic model 102 will still use the deterministic output as a starting point for the central tendency represented by a combination of parameters.

The disclosed neural network allows to provide a deterministic output and its uncertainty using a single end-to-end trained model. It allows to extract the uncertainty information of a deterministic output in a 100% trainable way, with minimal human intervention. The uncertainty information is extracted during the training process, directly from the training dataset, and there is no need for a post training analysis to derive the uncertainty information. The disclosed solution is easy to implement.

At inference time, the disclosed architecture doesn't require substantial memory allocation nor complex computations.

The probabilistic model is generally a smaller model compared with the first learning model and can be composed of a few layers. Therefore, the addition of the probabilistic model to the architecture doesn't lead to a significant increase in memory usage. This makes the disclosed architecture suited for implementation on many different embedded platforms including resource-limited embedded platforms such as microcontrollers which have specific constraints on memory and CPU usage.

Depending on the use case, the disclosed neural network can be implemented in a modular way. Indeed, it is possible to transform an existing neural network comprising a deterministic model by adding a probabilistic model to it. The probabilistic model can be added by program upgrade (a computer program configured to implement the existing neural network can be upgraded to integrate the probabilistic model into the existing neural network).

Different training methods can be used to train the above-described neural network. Exemplary embodiments of two training methods will now be described: in the following of the description, the first training method is referred to as pre-trained method and the second training method is referred to a joint method.

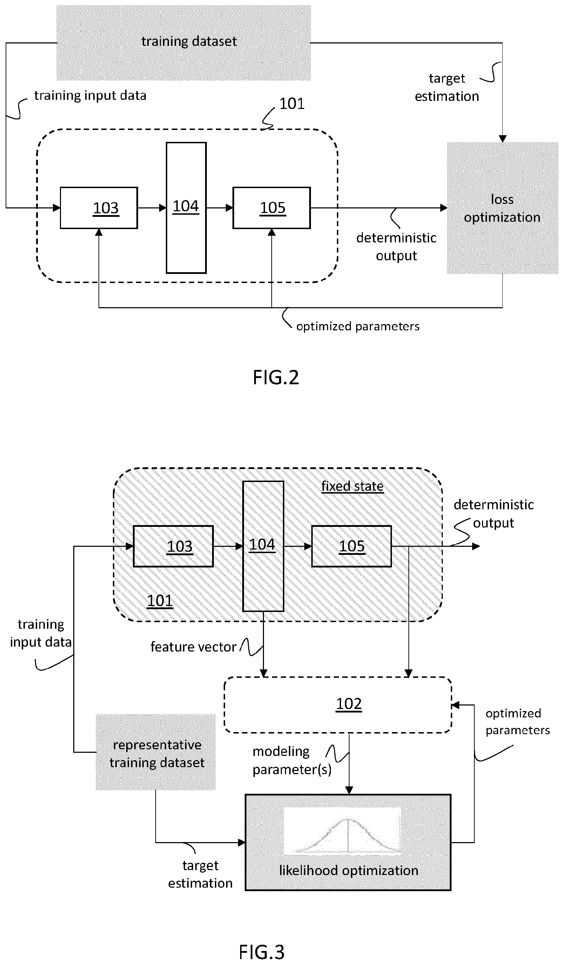

In the pre-trained method, the deterministic model 101 is trained first as depicted in FIG.2. Training is done by using a training dataset comprising training input data (e.g. obtained from data sources, captured from real sensors, or simulated synthetically) and target estimations corresponding to the training input data that the model tries to learn, commonly referred to as ground truths. The training process consists in updating the tunable parameters of the deterministic model 101 to optimize a loss function indicative of the error between the deterministic estimation and ground truth. For example, if the outputs of the deterministic model 101 are totally off from the expected ground truths, the loss function returns a high number. Whereas, if the outputs are good, it returns a low number. Optimizing the loss function consists in updating the tunable parameters of the deterministic model 101 so that the loss function returns the lowest number possible. The tunable parameters of the deterministic model are updated using the training data until the loss function converges and/or a specific threshold is attained on predefined performance metrics, signifying that the deterministic model has reached a satisfactory level of accuracy. Once the training process is completed, the parameters of the deterministic model 101 are frozen to the best parameters obtained during training.

This first training step relies only on the training dataset (training input data and corresponding ground truths). The feature vectors are estimated implicitly as part of the full forward path through the deterministic model, without supervision. The deterministic estimation is done explicitly and used to optimize the loss function.

Once the deterministic model 101 is trained, the parameters of the deterministic model are frozen and the probabilistic model 102 is trained as depicted in FIG.3. During this second training step, the probabilistic model 102 takes as an input the deterministic outputs and the feature space provided by the deterministic model 101 (which parameters are frozen). By employing the feature space, the knowledge learned from deterministic model 101 is effectively transferred to facilitate the training of the probabilistic model 102. This ensures that the model benefits from the valuable representations and uncertainty captured by the intermediate layers of the deterministic model 101.

Based on the deterministic outputs and the feature space provided by the deterministic model 101, the probabilistic model 102 outputs one or more probability distribution modeling parameters. The training of probabilistic model 102 is performed by maximizing a likelihood function so that for a training input sample, under the probability distribution modeled by the modeling parameter(s), the target estimation (or ground truth) is more probable.

In the example of FIG.3, the probability distribution is a Gaussian which is represented by two modeling parameters: the mean µ and the standard deviation a . The parameters of probabilistic model 102 are updated until convergence so that the target estimation (or ground truth) corresponding to the training input data is more probable under the probability distribution modeled by the mean µ and the standard deviation σ generated by the probabilistic model 102.

The training dataset used during this second training step is referred to as representative dataset. It includes a diverse collection of input data samples that accurately reflects the characteristics and the variability of the larger training dataset. The representative dataset is of relatively small size.

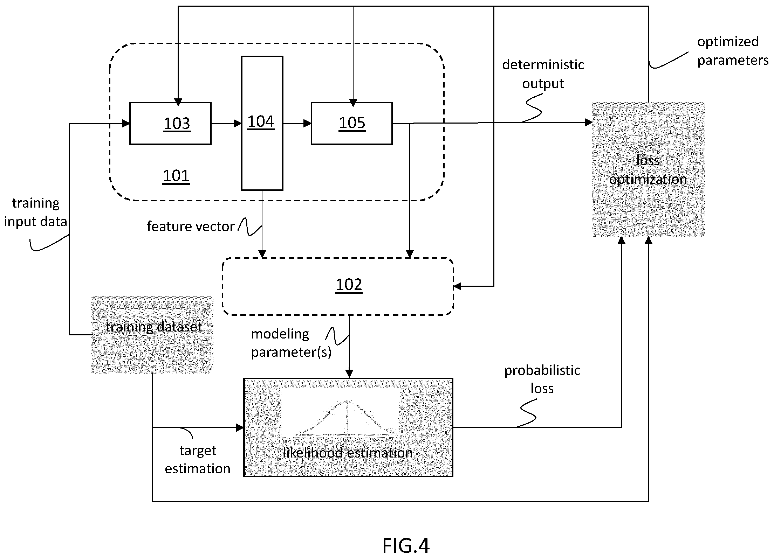

The joint training method is depicted in FIG.4. In the joint training model, the deterministic and the probabilistic models 101 and 102 are trained together based on a training dataset comprising training input samples associated target estimations. Training includes optimizing the tunable parameters of the deterministic model 101 by optimizing a loss function which represents the error between the target estimations of the training dataset for a given training input sample and the deterministic output generated by the deterministic model for the given training input sample; and optimizing the tunable parameters of the probabilistic model 102 by maximizing a likelihood function so that for the given training input sample, under the probability distribution modeled by the modeling parameter(s), the target estimation (or ground truth) is more probable.

As depicted in FIG.4, the likelihood function block takes as input the target estimation and the modelling parameters that are output by the probabilistic model 102, and provides as output a scalar representing a probabilistic loss. The probabilistic loss and the deterministic output provided by the deterministic model 101 are used by the loss optimization block to calculate a global loss. The optimized parameters are propagated back to the encoder 103, the decoder 105 and the second learning model 102 (optimization step). For example, the probabilistic loss is weighted before being added to the deterministic loss, or simply added to the deterministic loss.

Both training methods rely on only a single ground truth value for each training input sample.

The choice of the training method may depend on the task complexity and/or the application. For example, when the target variable is very simple to train, it is possible to train the two models (deterministic and probabilistic) at the same time to have a simplified and possibly faster training. On more complex scenarios, the joint training method may not be successful as the convergence (or stable state) of the deterministic model 101 usually requires a much longer training process and more training data, than the probabilistic model 102. The pre-trained method allows for modular implementations where an existing neural network is upgraded with a probabilistic model. It can also be used to update the probabilistic model 102 with new data samples or to customize the probabilistic model 102 with personal data.

An advantage of the pre-trained method is that only a small representative dataset is required to train the probabilistic model. A full-size training dataset is not required because, in terms of neural network architecture, the most data-demanding part is the encoder in charge of extracting the feature vectors, which is part of the pre-trained deterministic model.

The present disclosure also relates to an apparatus configured to implement a function based on input data originating from at least one data source, the function comprising generating a final estimation and an uncertainty as described above. For example, the function can deliver a signal taking into consideration on the final estimation and the uncertainty. For example, the function of the apparatus comprises performing a data fusion from input data originating from a plurality of data sources. In an embodiment, the apparatus comprises at least one sensor and at least part of the input data is acquired by the at least one sensor. For example, the uncertainty can be used by the apparatus to distinguish changes in the output of a system from noise or artifact. This is essential information e.g. in data fusion systems, where the outputs of several sensors are processed together.

Example of applications will now be described for illustration purposes. This is not limitative. The disclosed apparatus and method are application agnostic.

A first example relates to a wearable apparatus. Wearables are often used in day-to-day life to monitor vital signs of a person, such as the heart rate (HR), the respiration rate (RR), the oxygen saturation etc. These vital signs however are not directly available, and they are usually computed from one or more sensor data, most commonly being photoplethysmographic (PPG) sensor. Neural networks with a deterministic model are commonly used for that purpose. Such neural network can advantageously be upgraded with a probabilistic model as disclosed herein so that the neural network provides not only a final estimation but also an uncertainty associated to the final estimation. The uncertainty can then be used by the wearable apparatus in a manner that is suitable for the vital signs monitoring use-case.

In another example related to autonomous driving, a trajectory prediction can be enhanced by incorporating uncertainty estimates. Instead of providing a single trajectory, the system can anticipate a range of potential future states for surrounding objects. This adaptability improves decision-making, ensuring the autonomous vehicle navigates safely through dynamic traffic scenarios.

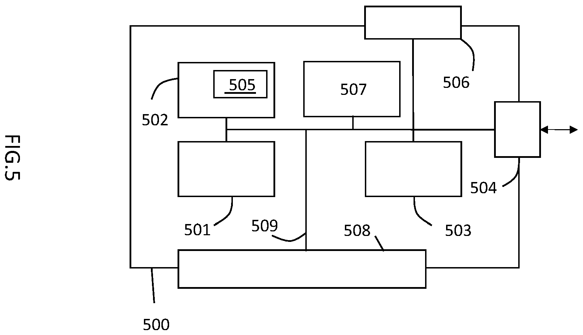

FIG.5 is a block diagram of an apparatus 500 that can be used to implement a neural network or a training method as disclosed herein. The apparatus 500 comprises a processor 501, a memory 502, a user interface 503, a communication interface 504 enabling communication with other devices through e.g. a wireless network, a display 506 suitable for displaying data to a user, a working memory 507, and one or more sensors 508. The various components of the apparatus 500 are connected via a communication bus 509. Memory 502 contains software code 505. Memory 507 is used to store and manage data. The apparatus may include other components, and some components may be absent, as required by the context of use and the function of the apparatus. For example, the user interface and/or or the wireless communication and/or the display and/or the sensors may be absent or may be external parts connected to the apparatus through one or more connectors. For example, apparatus 500 may also include other components typically found in computing systems, such as an operating system, queue managers, device drivers, or one or more network protocols that are stored in memory 502 and executed by the processor 501.

According to a first aspect of the disclosure, when the processor executes software code 505, it causes the apparatus to implement a neural network according to one or more described embodiments, such as those described in connection with FIG.1. The apparatus 500 may be a smartwatch, a car or a mobile phone etc. which operate a neural network as disclosed herein.

According to a second aspect of the disclosure, when the processor executes software code 505, it causes the apparatus to implement a training method according to one or more described embodiments, such as those described in connection with FIG.2, FIG.3 and FIG.4. The apparatus 500 may be a computer used to train a neural network as disclosed herein and send the neural network, or upgrades of the neural network, to another apparatus, referred to as edge apparatus, which will operate the neural network, for example a smartwatch, a car or a mobile phone.

For example, in the case of respiratory rate monitoring using a wearable apparatus, ground truth can be relatively easily extracted by giving instructions of breathing to a user of the wearable apparatus and recording continuously the data of the user. This allows to collect personalized data, which can be used to train a generic probabilistic mode, obtain a specific probabilistic model dedicated to the user and provide more accurate estimation of uncertainty. In an embodiment the user data can be collected by the wearable apparatus (edge apparatus) and sent to a remote computer that will train the probabilistic model with the user data. Then the trained probabilistic model can be sent to the wearable apparatus as a software upgrade. The generic neural network can still be used to provide estimations until the upgrade is completed. Such scenario can be applied to many other use cases where an edge apparatus run a neural network which is trained with the pre-trained method.

As the probabilistic model is relatively small and training is not too demanding in terms of resources, it is also possible to train the probabilistic model directly on the edge apparatus rather than on the remote computer. For instance, the edge apparatus can employ the embedded probabilistic model to continually improve its task based on an individual unique data. This not only enhances accuracy of the model's predictions, but also reduces the need for transmitting large amounts of data to remote computers for training.

The processor 501 may be any type of processor such as a general purpose central processing unit ("CPU") or a dedicated microprocessor such as an embedded microcontroller or a digital signal processor ("DSP"), or a graphics processing unit ("GPU").

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

For example, the data disclosed herein may be stored in various types of data structures which may be accessed and manipulated by a programmable processor (e.g., CPU or FPGA) that is implemented using software, hardware, or combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, blocks denoted as "means (or modules) configured to perform ..." (a certain function) shall be understood as functional blocks comprising circuitry that is adapted for performing or configured to perform a certain function. A means or module being configured to perform a certain function does, hence, not imply that such means or module necessarily is performing said function (at a given time instant). Moreover, any entity described herein as "means" or "module", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, graphics processing units (GPU), network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A computer implemented method comprising steps for generating an uncertainty associated with a final estimation produced by a neural network based on input data, wherein the neural network comprises:
- a first learning model comprising a first encoder configured to receive the input data and to generate a feature vector, and a decoder configured to receive the feature vector and to generate a first estimation relating to the input data, and
- a second learning model comprising a second encoder configured to receive the feature vector and the first estimation, and to generate at least one modeling parameter of a probability distribution, the second learning model being configured to generate said uncertainty based on said at least one modeling parameter.

2. A computer implemented method as claimed in claim 1, wherein the input data are acquired by one or more data sources.

3. A computer implemented method as claimed in claim 2, wherein at least part of the one or more data sources are sensors.

4. A computer implemented method as claimed in any of claims 1 to 3, wherein the final estimation is based on said first estimation.

5. A computer implemented method as claimed in any of claims 1 to 4, wherein the probability distribution has a central tendency, and the final estimation is based on said central tendency.

6. A computer implemented method as claimed in any of claims 1 to 5, wherein the at least one modeling parameter is representative of a dispersion of the probability distribution.

7. A computer implemented method as claimed in any of claims 1 to 5, wherein the at least one modeling parameter is representative of a dispersion of the probability distribution and a central tendency of the probability distribution.

8. A computer implemented method comprising steps for implementing a second learning model intended to cooperate with a first learning model for performing the steps of a method as claimed in any of claims 1 to 7.

9. A computer implemented method comprising steps for training a second learning model to be used for performing the steps of a method as claimed in any of claims 1 to 7, based on a pre-trained first learning model, comprising:
- receiving from a pre-trained first learning model, a feature vector and a first estimation based on training input data associated with target estimations,
- maximizing a likelihood function so that for said training input data, under the probability distribution modeled by the at least one modeling parameter, the target estimations are more probable.

10. A computer implemented method comprising steps for training a neural network to be used in a method as claimed of any of claims 1 to 7, wherein the first learning model and the second learning model are jointly trained based on training input data associated target estimations, said training method comprising:
- minimizing a first error by the first learning model between the target estimations and the first estimations generated by the decoder for said training input data, and
- maximizing a likelihood function so that for said training input data, under the probability distribution modeled by the at least one modeling parameter, the target estimations are more probable.

11. An apparatus configured to implement a function based on input data originating from at least one data source, wherein the function comprises generating a final estimation and an uncertainty associated with said final estimation, from the input data, by a computer implemented method as claimed in any of claims 1 to 7.

12. An apparatus as claimed in claim 11, wherein the function further comprises delivering a signal taking into consideration said final estimation and said uncertainty.

13. An apparatus as claimed in claims 11 or 12, comprising at least one sensor, wherein at least part of the input data is acquired by said at least one sensor.

14. An apparatus as claimed in any of claims 11 to 13, wherein the function comprises performing a data fusion from input data originating from a plurality of data sources.

15. An apparatus as claimed in any of claim 12, wherein the input data include data representative of vital signs of a user, or of street signs of a vehicle, or of a 3D scene, and the signal is indicative of a condition of the user, or a driving decision, or a rendering decision respectively.

16. A computer program comprising instructions which when executed by an apparatus cause the apparatus to perform the steps of a method as claimed in any of claims 1 to 10.

17. A non-transitory computer program product comprising instructions which when executed by an apparatus cause the apparatus to perform the steps of a method as claimed in any of claims 1 to 10.
